# EUROPEAN PATENT SPECIFICATION

(11) **EP 3 988 823 B1**
(45) Date of publication and mention of the grant of the patent: **24.04.2024**
(21) Application number: 21187534.9
(22) Date of filing: 23.07.2021
(51) Int. Cl.: F16K 3/24, F16K 31/42, F16K 11/044, F16K 37/00, F02C 7/232, F16K 27/04, F15B 13/043

(54) **POPPET VALVE ASSEMBLY**
SITZVENTILANORDNUNG
ENSEMBLE SOUPAPE CHAMPIGNON

(30) Priority: 21.10.2020 US 202017076360
(43) Date of publication of application: 27.04.2022
(73) Proprietor: GE Aviation Systems LLC, Grand Rapids, MI 49512 (US)
(72) Inventor: HIELKEMA, Jerry, Grand Rapids, 49512 (US); HALLISEY, Kevin, Grand Rapids, 49512 (US); PERMENTER, Tyler, Grand Rapids, 49512 (US); OPIFICIUS, Julian, Grand Rapids, 49512 (US)
(74) Representative: Openshaw & Co.

(56) References cited:
- EP-A1- 3 584 475
- DE-A1- 19 724 076
- DE-A1-102016 209 439
- US-A- 3 542 332
- US-A- 4 340 086
- US-A- 4 381 099

## Description

This invention was made with government support under Contract No. W58RGZ-16-C-0047 awarded by the United States Government. The government has certain rights in the invention.

### TECHNICAL FIELD

The disclosure relates to valve assemblies including for example valve assemblies that can control bleed air from turbine engines.

### BACKGROUND

Turbine engines, and particularly gas or combustion turbine engines, are rotary engines that extract energy from a flow of combusted gases passing through the engine onto a multitude of rotating turbine blades. Gas turbine engines have been used for land and nautical locomotion and power generation, but are most commonly used for aeronautical applications such as airplanes or helicopters. In airplanes, gas turbine engines are used for propulsion of the aircraft. Various types of valves can be used such as butterfly valves, poppet valves, check valves, and others. Configurations of the valves can either partially or completely restrict the flow of bleed air.

US 4,340,086 relates to a hydraulic control valve unit according to the preamble of claim 1. EP 3 584 475 relates to a pilotoperated hydraulic directional cartridge valve. DE 10 2016 209 439 relates to a directional control valve with a non-return valve function. DE 197 24 076 relates to an electromagnetic actuating device for a hydraulic control valve. US-4381099-A relates to a faucet for a frozen carbonated beverage machine.

### BRIEF DESCRIPTION

Aspects and advantages of the disclosure will be set forth in part in the following description, or may be obvious from the description, or may be learned through practice of the disclosure herein. The scope of the present invention is defined by the appended claims.

### BRIEF DESCRIPTION OF THE DRAWINGS

A full and enabling disclosure, including the best mode thereof, directed to one of ordinary skill in the art, is set forth in the specification, which refers to the appended figures in which:
FIG. 1 is a schematic cross-sectional diagram of a gas turbine engine for an aircraft.
FIG. 2 is a schematic cross-sectional diagram of a valve assembly, in an open position, that can be utilized with the gas turbine engine of FIG. 1.
FIG. 3 is a perspective cross-sectional view of the valve assembly of FIG. 2 in an open position.
FIG. 4 is a variation of the perspective cross-sectional view of the valve assembly of FIG. 3 in a closed position.
FIG. 5 is a variation of the schematic cross-sectional diagram of FIG. 2 in a partially open position.

### DETAILED DESCRIPTION

Aspects of the disclosure described herein are broadly directed to an apparatus for controlling air flow by a valve. Air actuated valves are commonly used on jet engines to provide or restrict bleed air to be utilized for environmental control systems or anti-ice systems. Poppet valves can be used to allow or disallow this bleed air flow from the engine to the system. Generally, in poppet valves the operating element keeping the poppet on its seat can be operated mechanically, pneumatically, hydraulically, or electrically by means of a solenoid. Valves can be either normally open or closed, specifically referring to state that they return to when power is removed.

The valve assembly, as described herein, selectively opens and closes a fluid passage. The fluid passage and the location of the poppet are selected to reduces forces on the poppet by the fluid in the fluid passage that, when applied, encourage the poppet to remain in the closed position. Further, the valve assembly as described herein can reduce turbulence in the fluid that flows through the fluid passage. Aspect of the valve assembly described herein can allow for a smaller, lighter weight valve assembly.

For the purposes of illustration, one exemplary environment within which the valve can be utilized will be described in the form of a turbine engine. Such a turbine engine can be in the form of a gas turbine engine, a turboprop, turboshaft or a turbofan engine, in non-limiting examples. It will be understood, however, that aspects of the disclosure described herein are not so limited and can have general applicability within other valves. For example, the disclosure can have applicability for a valve in other engines or vehicles, and can be used to provide benefits in industrial, commercial, and residential applications.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

Additionally, as used herein, the terms "excitation," "energize," "actuate," or "activate" and their various noun/verb forms can essentially be interchanged and are intended to indicate the control or influence of a regulator or valve. The "excitation," "energization," "actuation," or "activation" regulator or valve can correspond to a change in the output of that device, whether that be of a bi-state or a proportional nature to the control or influence provided. The use of such terms will be readily understood to be used in a non-limiting manner by anyone knowledgeable in the art which constitutes the scope of this document.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

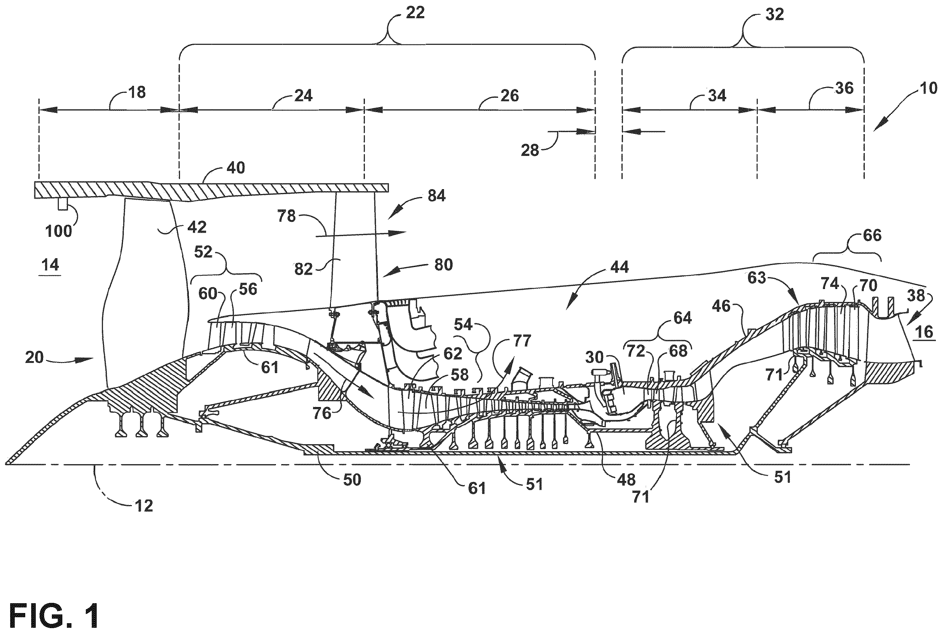

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40. A total air temperature (TAT) sensor 100 can be disposed in the fan casing 40 as shown; however, this example is not meant to be limiting and the TAT sensor 100 can be positioned in other locations in the engine 10.

A HP shaft or spool 48 disposed coaxially about the centerline 12 of the engine 10 drivingly connects the HP turbine 34 to the HP compressor 26. A LP shaft or LP spool 50, which is disposed coaxially about the centerline 12 of the engine 10 within the larger diameter annular HP spool 48, drivingly connects the LP turbine 36 to the LP compressor 24 and fan 20. The spools 48, 50 are rotatable about the engine centerline and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating blades 56, 58. It is noted that the number of blades, vanes, and compressor stages shown in FIG. 1 were selected for illustrative purposes only, and that other numbers are possible.

The blades 56, 58 for a stage of the compressor can be mounted to (or integral to) a disk 61, which is mounted to the corresponding one of the HP and LP spools 48, 50. The vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12 while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

The blades 68, 70 for a stage of the turbine can be mounted to a disk 71, which is mounted to the corresponding one of the HP and LP spools 48, 50. The vanes 72, 74 for a stage of the compressor can be mounted to the core casing 46 in a circumferential arrangement.

Complementary to the rotor portion, the stationary portions of the engine 10, such as the static vanes 60, 62, 72, 74 among the compressor and turbine section 22, 32 are also referred to individually or collectively as a stator 63. As such, the stator 63 can refer to the combination of non-rotating elements throughout the engine 10.

In operation, the airflow exiting the fan section 18 is split such that a portion of the airflow is channeled into the LP compressor 24, which then supplies pressurized air 76 to the HP compressor 26, which further pressurizes the air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

A portion of the pressurized airflow 76 can be drawn from the compressor section 22 as bleed air 77. The bleed air 77 can be drawn from the pressurized airflow 76 and provided to engine components requiring cooling. The temperature of pressurized airflow 76 entering the combustor 30 is significantly increased. As such, cooling provided by the bleed air 77 is necessary for operating of such engine components in the heightened temperature environments.

A remaining portion of the airflow 78 bypasses the LP compressor 24 and core 44 and exits the engine 10 through a stationary vane row, and more particularly an outlet guide vane assembly 80, comprising a plurality of airfoil guide vanes 82, at the fan exhaust side 84. More specifically, a circumferential row of radially extending airfoil guide vanes 82 are utilized adjacent the fan section 18 to exert some directional control of the airflow 78.

Some of the air supplied by the fan 20 can bypass the core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

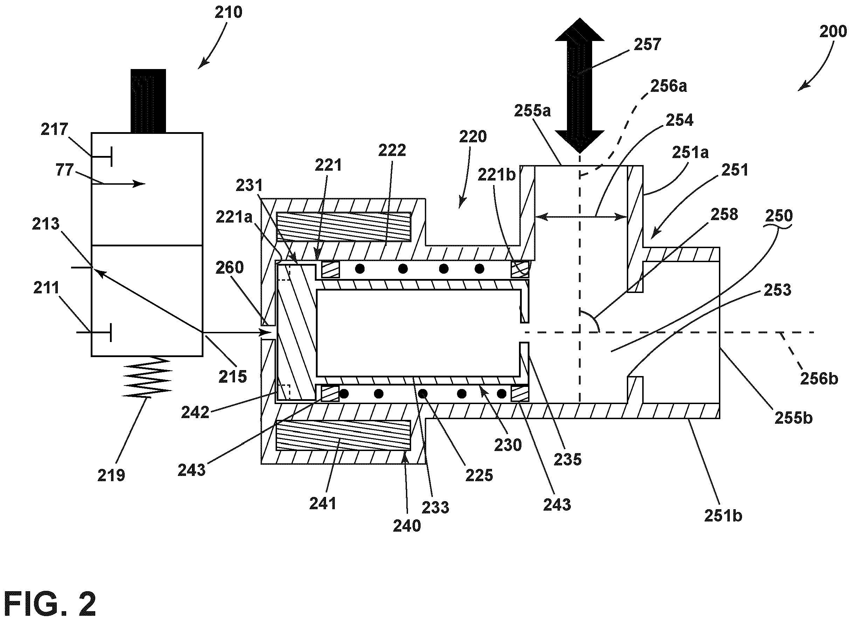

Turning to FIG. 2, a schematic valve assembly 200 is illustrated in the open position. A pressure regulator 210, a valve housing 220, a valve chamber 221, a position sensor assembly 240, a valve member 230, and a fluid passage 250 are included in the valve assembly 200.

The valve housing 220 includes the inlet/outlet tubes 251. By way of non-limiting example, the valve housing 220 defines an inlet conduit 251a having an inlet centerline 256a and an outlet conduit 251b having an outlet centerline 256b. The inlet conduit 251a and the outlet conduit 251b can connect by junction 253. The inlet conduit 251a and the outlet conduit 251b can be located such that the junction 253 connecting them forms an angle less than 180 degrees. That is, intersection of the inlet centerline 256a and the outlet centerline 256b can form an angle 258. While the inlet conduit 251a is illustrated as being generally perpendicular from the outlet conduit 251b, it is contemplated that the inlet conduit 251a and the outlet conduit 251b can be oriented in any suitable manner. By way of non-limiting example, the inlet conduit 251a and the outlet conduit 251b can be at any non-linear angle with respect to each other. By way of further non-limiting examples, the inlet conduit 251a and the outlet conduit 251b can be arranged so that the angle 258 is between 45 degrees and 180 degrees.

It will be understood that the inlet conduit 251a defines an inlet 255a and the outlet conduits 251b defines an outlet 255b. It will further be understood that the fluid passage 250 is defined within the valve housing 220 from the inlet 255a to the outlet 255b. While the relative terms inlet and outlet are used and it is understood and herein described for the remainder that fluid flows from the inlet to the outlet via the fluid passage 250, it will be understood that the fluid flow can be reversed in this valve assembly configuration and thus either conduit can be configured to be either an inlet or an outlet based on flow of fluid through the valve assembly 200. The arrow 257 indicates that the flow can be in either direction. As such, the inlet/outlet tubes 251 can be referred to by their respective function, inlet or outlet or generically as inlet/outlet tubes.

The valve housing 220 further defines the valve chamber 221 that is adjacent the fluid passage 250. More specifically, a first end 221a of the valve chamber 221 is fluidly coupled to the pressure regulator 210. A second end 221b of the valve chamber opposite the first end 221a is adjacent the fluid passage 250. While not shown in detail in this schematic diagram it will be understood that the valve housing 220 can be a single unitary piece or can be formed from multiple pieces including, but not limited to, a conduit portion including the inlet conduit 251a and the outlet conduit 251b and a manifold section on which the pressure regulator 210 can be provided and optionally forming at least a portion of the valve chamber 221. Regardless of the number of pieces, valve chamber sides 222 can define the valve chamber 221 and extend from the first end 221a to the second end 221b.

The valve member 230 is slidably disposed within the valve chamber 221. The valve member 230 has a first end or base 231 which is shaped to fit against the first end 221a of the valve chamber 221 when the valve assembly 200 is in an open position. The valve member 230 further extends in the valve chamber 221 away from the base 231 and adjacent the valve chamber sides 222 defining valve member sides 233 which lead into a second end or top 235 of the valve member 230.

One or more seals 243 can be located in the valve chamber 221 or other portions of the valve housing 220. In the illustrated example, a first seal is located at the second end 221b of the valve chamber 221 and a second seal is spaced therefrom towards the first end 221a of the valve chamber 221. The seals 243 can provide for blocking fluid movement between the valve chamber sides 222 and the valve member 230. The seals 243 can also retain a biasing element 225 therebetween. The biasing element 225 has been illustrated as a spring that provides a spring force or biasing force to maintain the valve member 230 in the opened position when the pressure regulator 210 is off.

In FIG. 2 the valve member 230 is depicted in a first position or open position in which the base 231 of the valve member 230 is against the first end 221a of the valve chamber 221. Additionally, the valve member 230 is designed to be a length that minimizes interference with the fluid passage 250 when the valve assembly 200 is in the opened position. In some non-limiting examples, the valve member 230 does not extend into the fluid passage 250 when the valve assembly 200 is open or the valve member 230 extends into the fluid passage 250 less than 25% of the width 254 of the fluid passage 250 of the inlet/outlet tubes 251.

The position sensor assembly 240 is adapted to output a signal indicative of a location of the valve member 230 within the valve housing 220. The position sensor assembly 240 can be in the form of a linear variable differential transformer (LVDT) having a coil 241 and a core 242. The coil 241 can include one or more coils. It is contemplated that the coil 241 can further include redundant windings. The coil 241 is inlaid into the valve housing 220. It is further contemplated that the coil 241 can be contained in a manifold or housing defining the valve chamber 221 or otherwise disposed adjacent to the valve chamber 221.

The core 242 is disposed on the base 231 of the valve member 230. That is, the core 242 can be coupled to or formed as part of the base 231 of the valve member 230. The position sensor assembly 240, is generally configured to detect the location of the valve member 230 within the valve housing 220 and more specifically within the valve chamber 221. The location can be determined by electrical signals sent from the coil 241 indicative of the location of the core 242, and therefore the location of the valve member 230 within the valve housing 220. The electrical signal sent from the coil 241 can be a result of the position of the core 242 or the movement of the core 242, as the coil 241 can be used to detect changes in the magnetic or electric fields based on the movement or position of the core 242.

In a further non-limiting example, the position sensor assembly 240 can have components of the position sensor assembly that are located in other parts of the engine or other parts of the vehicle. For example, a transmitter or display. Further, the measurements made by the position sensor assembly 240 can be received by one or more controllers. Alternately, the measurements made by the position sensor assembly 240 can be combined, compared, or replaced by measurements made by other pressure, temperature, or fluid sensors.

The pressure regulator 210 can include a pressure regulator inlet 211, a vent 213, a regulation valve 217, a regulation valve actuator 219, and a pressure regulator outlet 215. The pressure regulator inlet 211 receives a pressurized fluid, for example pressurized air, from the engine 10. By way of non-limiting example, the pressurized fluid can be a portion of the bleed air 77. The pressurized fluid received at the pressure regulator inlet 211 is then pushed through the vent 213 or the regulation valve 217.

The vent 213 and regulation valve 217 are generally spaced apart such that the regulation valve actuator 219 can direct the pressurized fluid through at least one of the vent 213 and the regulation valve 217. In some non-limiting examples, the regulation valve actuator 219 is able to direct the pressurized fluid though only one of the vent 213 and the regulation valve 217 at a time. The regulation valve actuator 219 allows or prevents the pressurized fluid through the vent 213 and the regulation valve 217. By way of example, the regulation valve actuator 219 can be a solenoid with an electromagnet to pull the closing aspect, for example a plug, plunger, or pivoted armature to allow fluid flow through the regulation valve 217. In addition, the regulation valve actuator 219 can be designed as any valve actuator which is bistable which is configured to fully open the valve or fully close the valve in response to electronic signaling or electric pulse.

In another non-limiting example, the regulation valve actuator 219 allows varying flow through the regulation valve 217. As a non-limiting example, this can be done with an electronic control and a torque motor. When the torque motor is variably energized, the regulator valve 217 is opened to a degree proportional to the excitation current flowing in the torque motor coil, allowing for varying flow through the valve. That is, the pressure regulator 210 allows varying flow through the pressure regulator outlet 215 that can be determined by the excitation to the pressure regulator 210. The excitation to the pressure regulator 210 can be increased or decreased by increasing or decreasing the energizing current provided to the regulation valve actuator 219. Increases or decreases in the energizing current provided to the regulation valve actuator 219 can correspond to increases or decreases in output flow through the pressure regulator outlet 215. A predetermined threshold can be determined, wherein excitation above the predetermined threshold can indicate an open valve and excitation at or below the predetermined threshold can indicate a closed or "off" valve.

If the regulation valve 217 is open, the pressurized fluid moves through the regulation valve 217 and through the pressure regulator outlet 215. Additionally, or alternatively, the power or the excitation to the pressure regulator 210 can be varied, that is, the output flow from the pressure regulator outlet 215 can be varied. The variation of power to the pressure regulator 210 can therefore be used to provide variable output flow.

Additionally, in a non-limiting example, a sensor system can be associated with the pressure regulator 210. The sensor system can be configured to sense the current state of the regulator valve 217, for example open, closed, or a percentage open.

In some non-limiting examples, the regulation valve 217 is controlled by an on/off regulation valve actuator 219 which will open the valve fully and push the valve member 230 to the fully extended length. In another non-limiting embodiments, the regulation valve 217 is modulated such that the full capacity of the pressurized fluid is not put through the regulation valve 217.

When the regulation valve actuator 219 allow the regulation valve 217 to be open or partially open, pressurized fluid can exit the pressure regulator 210 at pressure regulator outlet 215 and enter the valve chamber 221 via a channel 260. When the regulation valve actuator 219 is disabled or otherwise does not allow the regulation valve 217 to open, the pressurized fluid can exit the pressure regulator 210 at the vent 213. It is contemplated that any pressurized air in the valve chamber 221 can also flow back to the pressure regulator 210 via the channel 260 to be released through the vent 213.

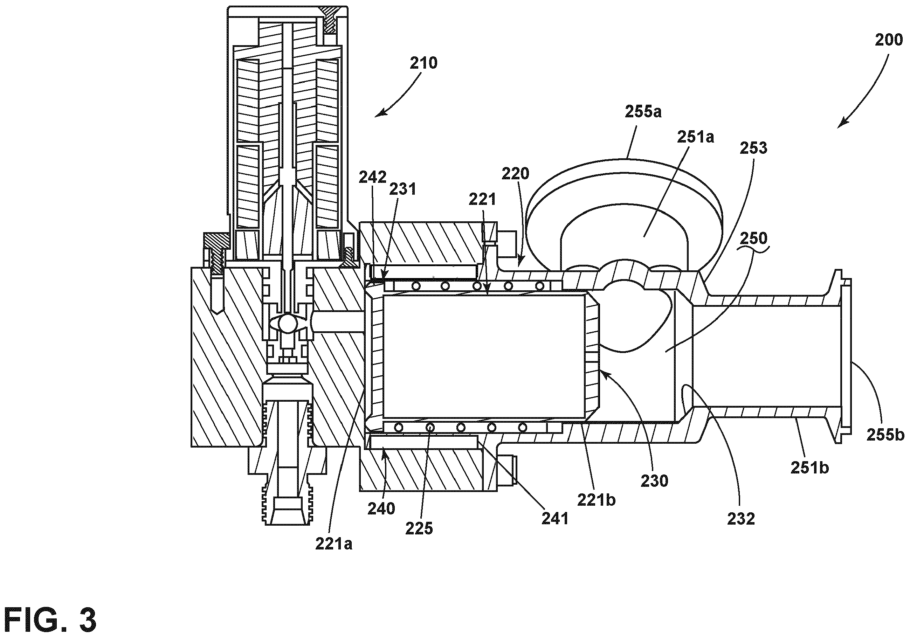

FIG. 3 shows a non-schematic illustration of the valve assembly of FIG. 2, depicting the valve assembly 200 in the opened position. The open position is the biased position of the valve member 230 determined by the biasing element 225. One detail shown in the view of FIG. 3 is that the valve housing 220 is at least partially formed by a manifold mounted to a conduit portion. The pressure regulator 210 is provided on the manifold and at least a portion of the valve chamber 221 is defined within the manifold and fluidly coupled to the pressure regulator 210. The poppet forming the moveable valve member 230 extends past the manifold in the open position. Further still it is easier to see that the inlet conduit 251a and the outlet conduit 251b are at an angle less than 180 degrees and are generally perpendicular at a 90-degree angle at the junction 253.

The position sensor assembly 240 is generally configured to detect the location of the valve member 230. The coil 241 is inlaid into the valve housing 220 adjacent the valve chamber 221 and extends from the first end 221a of the valve chamber 221 to the second end 221b of the valve chamber 221.

The core 242 formed as part of the base 231 of the valve member 230 can be at the first end 221a of the valve chamber 221 when the valve assembly 200 is in the opened position.

A valve seat 232 can be located at the junction 253 or at any location in the outlet conduit 251b. The poppet or valve member 230, in the open position, is spaced from the valve seat 232, allowing fluid to flow from the inlet 255a to the outlet 255b via the fluid passage 250. The location and orientation of the poppet or valve member 230 and the valve seat 232, as described herein, minimizes effects on the flow of the fluid from the inlet 255a to the outlet 255b.

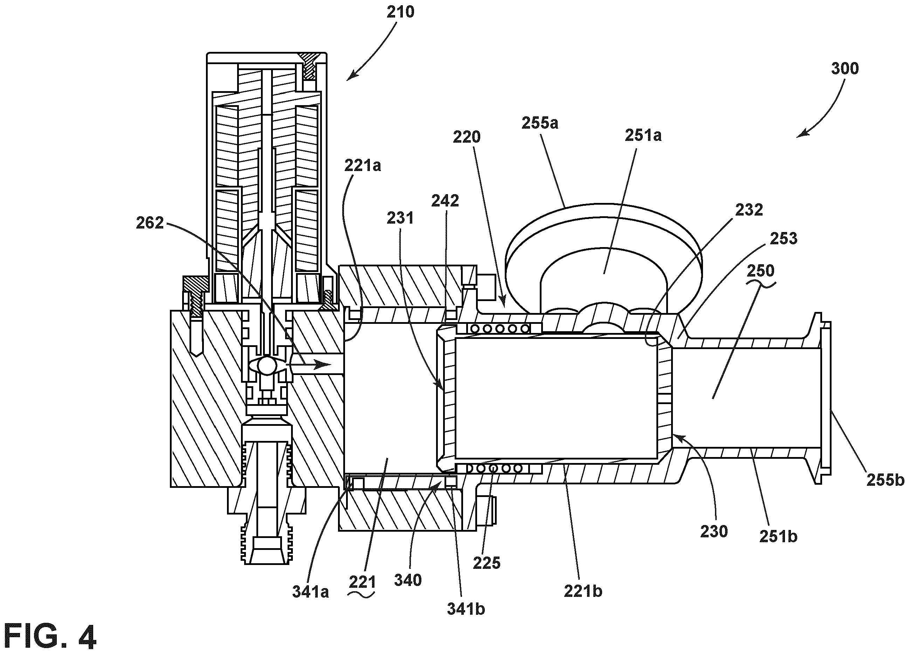

FIG. 4 depicts a valve assembly 300 in the closed position. The valve assembly 300 includes similar components as described for the valve assembly 200, where similar components have similar numbers increased by 100.

The valve assembly 300 includes the pressure regulator 210, the valve housing 220, the valve chamber 221, a position sensor assembly 340, the valve member 230, and the fluid passage 250. The valve housing 220 includes conduits defining an inlet conduit 251a and an outlet conduit 251b. The inlet conduit 251a and the outlet conduit 251b can be connect by junction 253.
The inlet conduit 251a and the outlet conduit 251b can be located such that the junction 253 connecting them forms an angle less than 180 degrees.

It will be understood that the inlet conduit 251a defines the inlet 255a and the outlet conduits 251b defines the outlet 255b. It will further be understood that the fluid passage 250 is defined within the valve housing 220 from the inlet 255a to the outlet 255b. While the relative terms inlet and outlet are used and it is understood and herein described for the remainder that fluid flows from the inlet to the outlet via the fluid passage 250, it will be understood that the fluid flow can be reversed in this valve assembly configuration and thus either conduit can be configured to be either an inlet or an outlet based on flow of fluid through the valve assembly 200. As such, the inlet/outlet tubes 251 can be referred to by their respective function, inlet or outlet or generically as inlet/outlet tubes.

The valve housing 220 further defines the valve chamber 221 that is adjacent the fluid passage 250. It is contemplated that the valve member 230 fluidly isolates the valve chamber 221 from the fluid passage 250. The valve member 230 is slidably disposed within the valve chamber 221. The valve member 230 has the base 231 which moves away from the first end 221a of the valve chamber 221 when the valve assembly 300 is in a partially open or closed position.

The valve assembly 300 is in a second position or the closed position when the valve member 230 reaches the valve seat 232. It is contemplated that the valve member 230, when seated in the valve seat 232, provides a fluid barrier within the fluid passage. That is, when the valve member 230 is seated in the valve seat 232, fluid cannot flow from the inlet 255a to the outlet 255b. Optionally, the seat can be located adjacent the junction 253 of the inlet conduit 251a and the outlet conduit 251b. The valve seat 232 can be contoured, angled, or otherwise shaped to receive a portion of the valve member 230.

The position sensor assembly 340 is adapted to output a signal indicative of a location of the valve member 230 within the valve housing 220. The position sensor assembly 340 can include at least two coil segments and the core 242. A first coil segment 341a can be located near the first end 221a of the valve chamber 221 and a second coil segment 341b can be located spaced away from the first end 221a toward the second end 221b.

The core 242 can be coupled to or formed as part of the base 231 of the valve member 230. The position sensor assembly 340 can use known methods for detecting a change in the electric field or the magnetic field caused by the movement or location of the core 242 in relationship to the first coil segment 341a and/or the second coil segment 341b. Detection by the position sensor assembly 340 can be used to determine the position of the valve member 230 within the valve chamber 221. The position sensor assembly 340 can include or couple to a controller or other known device for communication or determination of the position of the valve member 230.

Referring back to FIG. 2 and FIG. 3, in a normally open valve, the spring force pushes the valve member 230 to the opened position when the solenoid or regulation valve actuator 219 is unpowered. During operation when the valve assembly 200 is commanded to be closed and moved from the normally opened position, the regulation valve actuator 219 or solenoid is powered. Pressurized fluid is introduced by the pressure regulator 210 via the opening leading to the valve chamber 221 and as generally illustrated by an airflow line 262 (FIG. 4). The valve chamber 221 behind the base 231 of the valve member 230 is pressurized and the valve member 230 moves against the spring force of the biasing element 225. The valve member 230 moves into or further into the fluid passage 250 until it is sealed on the valve seat 232 formed in the valve housing 220, closing off the flow within the fluid passage 250 by fluidly isolating the inlet conduit 251a from the outlet conduit 251b. That is, the poppet or valve member 230 extends into the fluid passage 250, so that the inlet conduit 251a and the outlet conduit 251b are no longer fluidly connected.

The movement of the valve member is sensed by the position sensor assembly 240, 340. The movement of the core 242 that forms a portion of the base 231 or is couples to the base 231 communicates with the coil 241 or the first and second coil segments 341a, 341b. By way of non-limiting example, the coil 241 or the first and second coil segments 341a, 341b can detect differences or fluctuations of a magnetic field or an electric field to determine the location of the core 242.

When the output of the pressure regulator 210 is set to zero, for example by removing power from the regulation valve actuator 219, the pressurized fluid in in valve chamber 221 can exit through the vent 213. At this point, the pressurized air is no longer provided to the valve chamber 221. The valve member 230 lifts off or retreats from the valve seat 232 by the biasing force provided by the biasing element 225. It will be understood that the valve member 230 can begin to move to the opened position as soon as the force acting thereon is relieved or switched off. After lifting the valve member 230 off the valve seat 232, the valve seat 232 and the portion of the fluid passage 250 defined by the outlet conduit 251b are exposed to the flow of fluid flowing from the inlet 255a.

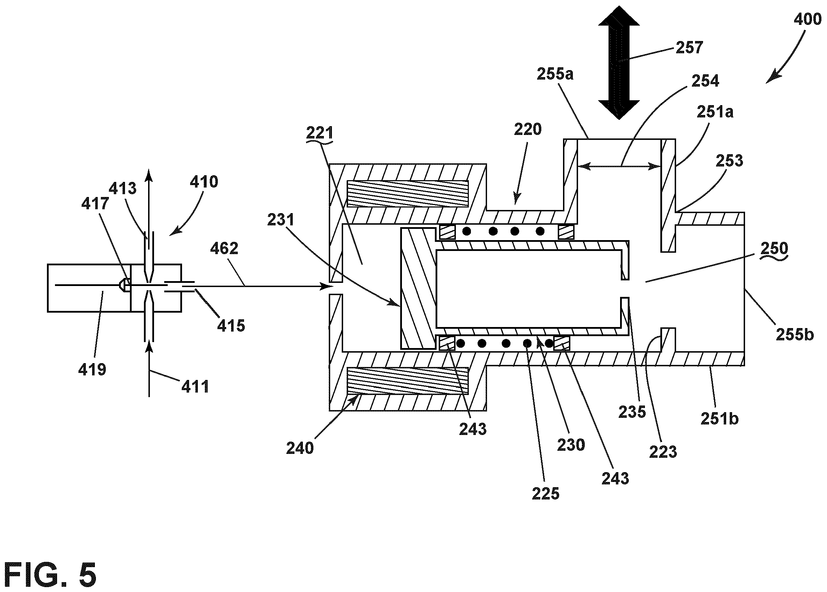

Benefits of the aspects of the disclosure include that fluid pressure from the fluid in the fluid passage 250 does not create additional force that would keep the poppet or valve member 230 in the closed position, thus allowing for a weaker spring or biasing element 225. Further, the orientation of the inlet conduit 251a, the outlet conduit 251b, and the valve member 230 allows for a smaller valve assembly 200. This is advantageous in aircraft applications where size and weight are often critical. Further, the valve assembly can also be used in a proportional control configuration as illustrated in FIG. 5.

FIG. 5 depicts a valve assembly 400 in the partially open position. The valve assembly 400 includes similar components as described for the valve assembly 200, 300, where similar components have similar numbers further increased by 100.

The valve assembly 400 includes a pressure regulator 410 or regulating valve, the valve housing 220, the valve chamber 221, the position sensor assembly 240, the valve member 230, and the fluid passage 250. The pressure regulator 410 or regulating valve can be a proportional control valve such as, but not limited to, a pulse width modulation (PWM) regulated fluid or hydraulic switch valve or proportional solenoid valve.

As with the previous assembly, the valve housing 220 defines the valve chamber 221 in operable connection to the pressure regulator 410. A valve member 230 in the form of a poppet is slidably received within the valve chamber 221. At least one biasing element 225 can bias the valve member 230 into the opened positioned. Seals 243 can provide sealing functionality and maintain the biasing element 225 in location. Further, the position sensor assembly 240 is provided adjacent the valve chamber 221 and can provide an output signal indicative of a position of the valve member 230 within the valve chamber 221. Such output signal can be received by a controller including a controller operably coupled to and controlling the pressure regulator 410.

The valve housing 220 further includes the inlet conduit 251a defining the inlet 255a and the outlet conduit 251b defining the outlet 255b. The inlet conduit2 and the outlet conduit 551b can be coupled via a junction 253 that defines an angle between the inlet conduit 251a and the outlet conduit 251b. the angle can be less than 180 degrees and as illustrated can arrange the inlet conduit 251a and the outlet conduit 251b in generally perpendicular arrangement. As indicated by the arrow 257, the valve assembly 400 allows for fluid flow in either direction.

The valve member or poppet 230 is slidably disposed within the valve chamber 221 and into the fluid passage 250. The poppet 230 has the base 231 that can include the core 242, which is detectable via the position sensor assembly 240. The top 235 of the poppet 230 is shaped to fit against the seat 223 defined within the valve housing 220. The seat 223 can be located at the junction 253 or the outlet conduit 251b.

The poppet 230 is moveable between a first position or opened position wherein the base 231 is generally adjacent the first end of the valve chamber 221 and a second position or closed position herein the top 235 seals against the seat 223. In FIG. 5 the poppet 230 is depicted in an intermediate position. It will be understood that the poppet 230 can be designed to be a length, profile, or shape that minimizes interference with the fluid passage 250 when the poppet is in the opened position. In some non-limiting examples, the poppet 230 does not extend into the fluid passage 250 when the valve assembly 200 is open. Alternatively, the poppet 230 minimally extends into the fluid passage 250 such as less than 25% of a width 254 of the fluid passage 250 when the valve assembly 200 is open.

The pressure regulator 410 can include a pressure regulator inlet 411, a vent 413, a regulation valve 417, a regulation valve actuator 419, and a pressure regulator outlet 415. The pressure regulator inlet 411 receives a pressurized fluid, for example pressurized air, from the engine 10. By way of non-limiting example, the pressurized fluid can be a portion of the bleed air 77. The pressurized fluid received at the pressure regulator inlet 411 is then pushed through the vent 413 or the regulation valve 417.

The regulation valve actuator 419 can be orientated to allow pressurized air to exit the vent 413 or to be directed to the regulation valve 417. By way of non-limiting example, the pressure regulator inlet 411 can be aligned with the vent 413, whereas the regulation valve 417 can be activated by regulation valve actuator 419 to close the vent 413 and fluidly connect the pressure regulator inlet 411 to the pressure regulator outlet 415.

In some non-limiting examples, the regulation valve actuator 419 is able to direct the pressurized fluid though only one of the vent 413 and the pressure regulator outlet 415 at a time. The regulation valve actuator 419 allows or prevents the pressurized fluid through the vent 413 and the regulation valve 417. By way of example and as shown in FIG. 5, the regulation valve actuator 419 can be a proportional solenoid or PWM solenoid. That is, the average value of the current flowing through the solenoid can be controlled by applying an intermittent electrical signal at a high rate. Proportional control of the regulation valve 417 by the regulation valve actuator 419 can allow for varying flow through the regulation valve 417 by way of the pressure regulator outlet 415. The regulated pressure pushes the base 231 towards the fluid passage 250 obstructing the flow through the fluid passage 250 at a percentage relative to the force applied to the poppet 230.

Alternatively, proportional control can be achieved using any known electronic control or torque motor actuator when torque motor is energized the regulator valve 417 is opened to a degree proportional to the current applied to the torque motor, allowing for varying degrees of open flow through the valve. If the regulation valve 417 is open, the pressurized fluid moves through the regulation valve 417 and through the pressure regulator outlet 415.

Additionally, in a non-limiting example, a sensor system can be associated with associated with the pressure regulator 410. The sensor system can be configured to sense the current state of the regulator valve 417, for example open, closed, percentage open.

In a non-limiting example of the operation of the valve assembly 400, pressurized fluid enters the pressure regulator inlet 411. Then the fluid is either vented, through the vent 413, and/or enters the regulation valve 417 and exits the pressure regulator outlet 415 into the valve chamber 221, as shown in airflow line 462. The pressurized fluid then meets the base 231 of the poppet 230, which is in the first position or open position. As pressurized fluid is added to the valve chamber 221, the addition of the pressurized fluid overcomes the force provided by the biasing element 225 and moves the poppet 230 towards the second position.

In some non-limiting examples, the regulation valve 417 is controlled by an on/off regulation valve actuator 419 which will open the valve fully and push the member 230 to the fully extended length. In another non-limiting embodiments, the regulation valve 417 is modulated such that the full capacity of the pressurized fluid is not put through the regulation valve 417. The pressurized fluid moves the poppet 230 partially away from the first end 221a. The poppet 230 thusly protrudes into the fluid passage 250 precluding part or all of the fluid traversing the fluid passage 250 from passing from the inlet 255a to the outlet 255b. The movement of the valve member can be sensed by the position sensor assembly 240 to indicate operation or errors in operation.

Several advantages are realized by the non-limiting examples discussed above, including non-limiting examples of the design allow pressure to be applied on "back" side of a normally open valve without increased spring force and negates effects of back pressure from the fluid in the fluid passage resulting in a smaller design that allows for proportional control.

Further, the poppet or valve member causes less interference with the fluid in the fluid passage when in the first or open position.

The design, as described here, the valve assembly can provide a better seal when in the second or closed position. The poppet or valve member is seated in the seat and supported by the sides of the valve chamber. The orientation of the poppet or valve member in the fluid passage when seated can reduce the turning effect or torque on the poppet or valve member that can be experienced in previous designs.

The valve assembly, as described herein, can allow for flow in either direction as the inlet can become the outlet and the outlet can become the inlet.

Further, the valve assembly, as described herein, can be used as a universal design with either a normally opened or normally closed configurations.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the

## Claims

1. A valve assembly (200, 300, 400) comprising:
a valve housing (220) having an inlet (251a) and an outlet (251b) that is angled from the inlet (251a), the valve housing (220) defining a fluid passage (250) therein and fluidly coupling the inlet (251a) and the outlet (251b), the valve housing (220) further defining a valve chamber (221) offset from the fluid passage (250);
a valve member (230) slidably disposed within the valve housing (220) between a first position wherein the valve member (230) is closed and abuts a seat (232) within the valve housing (220), and a second position wherein the valve member (230) is in a position a distance away from the seat (232) and enables fluid flow from the inlet to the outlet via the fluid passage (250);
a biasing element (225) configured to bias the valve member;
a pressure regulator (210, 410) fluidly coupled to the valve chamber (221) and adapted to provide pneumatic pressure into the valve chamber (221); and
a position sensor assembly (240, 340) provided within the valve housing (220), the position sensor assembly (240, 340) adapted to determine a location of the valve member (230),
**characterized in that**
the biasing element (225) is configured to bias the valve member (230) toward the second position.

2. The valve assembly (200, 300, 400) of claim 1 wherein the position sensor assembly (240, 340) is a linear variable differential transformer that comprises a coil (241, 341a, 341b) and a core (242), wherein the coil (241, 341a, 341b) is disposed adjacent to the valve chamber (221) and the core (242) disposed on a first end of the valve member (230).

3. The valve assembly (200, 300, 400) of any one of claims 1-2 wherein the position sensor assembly (240, 340) further comprises at least two coils (241, 341a, 341b) disposed in a spaced relationship adjacent the valve chamber (221) and a core (242) disposed on a first end of the valve member (230).

4. The valve assembly (200, 300, 400) of any one of claims 1-3 wherein the inlet (251a) is generally perpendicular to the outlet (251b).

5. The valve assembly (200, 300, 400) of any one of claims 1-4 wherein the pressure regulator (210, 410) is disposed at a first end (221a) of the valve chamber (221) and is configured to apply pressure to the first end of the valve member (230).

6. The valve assembly (200, 300, 400) of claim 5 wherein the valve member (230) partially extends into the fluid passage (250) in the first position.

7. The valve assembly (200, 300, 400) of claim 5 or 6, wherein the valve member (230) is a poppet held in the second position by the biasing element (225).

8. The valve assembly (200, 300, 400) of any one of claims 1-7 wherein the inlet (251a) and the outlet (251b) are at an angle less than 180 degrees.

9. The valve assembly (200, 300, 400) of claim 8 wherein the inlet (251a) and the outlet (251b) are at a 90-degree angle.

10. The valve assembly (200, 300, 400) of any one of claims 1-9 wherein the pressure regulator (210, 410) allows varying flow though the pressure regulator outlet (215, 415) determined by the excitation to the pressure regulator (210, 410), wherein flow is provided when the excitation is greater than a predetermined value and the valve assembly (200, 300, 400) closes when the excitation falls below the predetermined value.

## Patentansprüche

1. Ventilanordnung (200, 300, 400), umfassend:
ein Ventilgehäuse (220), das einen Einlass (251a) und einen Auslass (251b) aufweist, der von dem Einlass (251a) abgewinkelt ist, wobei das Ventilgehäuse (220) einen Fluiddurchgang (250) darin definiert und den Einlass (251a) und den Auslass (251b) fluidisch koppelt, wobei das Ventilgehäuse (220) ferner eine Ventilkammer (221) definiert, die von dem Fluiddurchgang (250) versetzt ist;
ein Ventilelement (230), das innerhalb des Ventilgehäuses (220) zwischen einer ersten Position, wobei das Ventilelement (230) geschlossen ist und an einem Sitz (232) innerhalb des Ventilgehäuses (220) anliegt, und einer zweiten Position verschiebbar eingerichtet ist, wobei das Ventilelement (230) in einer Position einen Abstand von dem Sitz (232) entfernt ist und eine Fluidströmung von dem Einlass zu dem Auslass über den Fluiddurchgang (250) ermöglicht;
ein Vorspannelement (225), das konfiguriert ist, um das Ventilelement vorzuspannen;
einen Druckregler (210, 410), der mit der Ventilkammer (221) fluidisch gekoppelt und angepasst ist, um einen pneumatischen Druck in die Ventilkammer (221) bereitzustellen; und
eine Positionssensoranordnung (240, 340), die innerhalb des Ventilgehäuses (220) bereitgestellt ist, wobei die Positionssensoranordnung (240, 340) angepasst ist, um eine Position des Ventilelements (230) zu bestimmen,
**dadurch gekennzeichnet, dass** das Vorspannelement (225) konfiguriert ist, um das Ventilelement (230) zu der zweiten Position hin vorzuspannen.

2. Ventilanordnung (200, 300, 400) nach Anspruch 1, wobei die Positionssensoranordnung (240, 340) ein linearer variabler Differenztransformator ist, der eine Spule (241, 341a, 341b) und einen Kern (242) umfasst, wobei die Spule (241, 341a, 341b) angrenzend an die Ventilkammer (221) eingerichtet ist und der Kern (242) an einem ersten Ende des Ventilelements (230) eingerichtet ist.

3. Ventilanordnung (200, 300, 400) nach einem der Ansprüche 1 bis 2, wobei die Positionssensoranordnung (240, 340) ferner mindestens zwei Spulen (241, 341a, 341b), die in einer beabstandeten Beziehung angrenzend an die Ventilkammer (221) eingerichtet sind, und einen Kern (242) umfasst, der an einem ersten Ende des Ventilelements (230) eingerichtet ist.

4. Ventilanordnung (200, 300, 400) nach einem der Ansprüche 1 bis 3, wobei der Einlass (251a) im Allgemeinen senkrecht zu dem Auslass (251b) ist.

5. Ventilanordnung (200, 300, 400) nach einem der Ansprüche 1 bis 4, wobei der Druckregler (210, 410) an einem ersten Ende (221a) der Ventilkammer (221) eingerichtet ist und konfiguriert ist, um Druck auf das erste Ende des Ventilelements (230) auszuüben.

6. Ventilanordnung (200, 300, 400) nach Anspruch 5, wobei sich das Ventilelement (230) in der ersten Position teilweise in den Fluiddurchgang (250) erstreckt.

7. Ventilanordnung (200, 300, 400) nach Anspruch 5 oder 6, wobei das Ventilelement (230) ein Tellerventil ist, das durch das Vorspannelement (225) in der zweiten Position gehalten wird.

8. Ventilanordnung (200, 300, 400) nach einem der Ansprüche 1 bis 7, wobei der Einlass (251a) und der Auslass (251b) in einem Winkel von weniger als 180 Grad liegen.

9. Ventilanordnung (200, 300, 400) nach Anspruch 8, wobei der Einlass (251a) und der Auslass (251b) in einem Winkel von 90 Grad liegen.

10. Ventilanordnung (200, 300, 400) nach einem der Ansprüche 1 bis 9, wobei der Druckregler (210, 410) eine variierenden Strömung durch den Druckreglerauslass (215, 415) hindurch ermöglicht, der durch die Anregung an den Druckregler (210, 410) bestimmt wird, wobei die Strömung bereitgestellt wird, wenn die Anregung größer als ein zuvor bestimmter Wert ist und die Ventilanordnung (200, 300, 400) schließt, wenn die Anregung unter den zuvor bestimmten Wert fällt.

## Revendications

1. Ensemble soupape (200, 300, 400), comprenant :
un logement de soupape (220) ayant une entrée (251a) et une sortie (251b) qui est inclinée par rapport à l'entrée (251a), le logement de soupape (220) définissant un passage pour fluide (250) à l'intérieur de celui-ci et accouplant fluidiquement l'entrée (251a) et la sortie (251b), le logement de soupape (220) définissant en outre une chambre de soupape (221) décalée du passage pour fluide (250) ;
un élément de soupape (230) disposé de manière coulissante à l'intérieur du logement de soupape (220), entre une première position, dans laquelle l'élément de soupape (230) est fermé et vient en butée contre un siège (232) à l'intérieur du logement de soupape (220), et une seconde position, dans laquelle l'élément de soupape (230) est dans une position à distance du siège (232) et permet un écoulement de fluide depuis l'entrée vers la sortie par l'intermédiaire du passage pour fluide (250) ;
un élément de sollicitation (225) conçu pour solliciter l'élément de soupape ;
un régulateur de pression (210, 410) accouplé fluidiquement à la chambre de soupape (221) et configuré pour fournir une pression pneumatique dans la chambre de soupape (221) ; et
un ensemble capteur de position (240, 340) fourni à l'intérieur du logement de soupape (220), l'ensemble capteur de position (240, 340) étant configuré pour déterminer un emplacement de l'élément de soupape (230),
**caractérisé en ce que** l'élément de sollicitation (225) est conçu pour solliciter l'élément de soupape (230) vers la seconde position.

2. Ensemble soupape (200, 300, 400) selon la revendication 1 dans lequel l'ensemble capteur de position (240, 340) est un transformateur différentiel à variable linéaire qui comprend une bobine (241, 341a, 341b) et un noyau (242), dans lequel la bobine (241, 341a, 341b) est disposée de manière adjacente à la chambre de soupape (221) et le noyau (242) est disposé sur une première extrémité de l'élément de soupape (230).

3. Ensemble soupape (200, 300, 400) selon l'une quelconque des revendications 1 à 2, dans lequel l'ensemble capteur de position (240, 340) comprend en outre au moins deux bobines (241, 341a, 341b) disposées de manière espacée les unes des autres et de manière adjacente à la chambre de soupape (221), et un noyau (242) disposé sur une première extrémité de l'élément de soupape (230).

4. Ensemble soupape (200, 300, 400) selon l'une quelconque des revendications 1 à 3, dans lequel l'entrée (251a) est généralement perpendiculaire à la sortie (251b).

5. Ensemble soupape (200, 300, 400) selon l'une quelconque des revendications 1 à 4, dans lequel le régulateur de pression (210, 410) est disposé au niveau d'une première extrémité (221a) de la chambre de soupape (221) et est configuré pour exercer une pression sur la première extrémité de l'élément de soupape (230).

6. Ensemble soupape (200, 300, 400) selon la revendication 5, dans lequel l'élément de soupape (230) s'étend partiellement dans le passage pour fluide (250) dans la première position.

7. Ensemble soupape (200, 300, 400) selon la revendication 5 ou 6, dans lequel l'élément de soupape (230) est un clapet maintenu dans la seconde position par l'élément de sollicitation (225).

8. Ensemble soupape (200, 300, 400) selon l'une quelconque des revendications 1 à 7, dans lequel l'entrée (251a) et la sortie (251b) sont à un angle inférieur à 180 degrés.

9. Ensemble soupape (200, 300, 400) selon la revendication 8 dans lequel l'entrée (251a) et la sortie (251b) sont à un angle de 90 degrés.

10. Ensemble soupape (200, 300, 400) selon l'une quelconque des revendications 1 à 9, dans lequel le régulateur de pression (210, 410) autorise un écoulement variable à travers la sortie de régulateur de pression (215, 415), lequel écoulement variable est déterminé par l'excitation distribuée au régulateur de pression (210, 410), dans lequel l'écoulement est fourni lorsque l'excitation distribuée est supérieure à une valeur prédéterminée et l'ensemble soupape (200, 300, 400) se ferme lorsque l'excitation distribuée devient inférieure à la valeur prédéterminée.
